# EUROPEAN PATENT APPLICATION

(11) **EP 1 453 280 A1**
(43) Date of publication of application: **01.09.2004**
(21) Application number: 04250873.9
(22) Date of filing: 18.02.2004
(51) Int. Cl.: H04M 1/00, H04M 7/00

(54) **Method and system for placing and redirecting IP-based telephone calls**

(30) Priority: 26.02.2003 US 375638
(71) Applicant: Hewlett-Packard Development Company, L.P., Houston, TX 77070 (US)
(72) Inventor: Mandle, Thomas C., Los Altos Hills, California 94022 (US)
(74) Representative: Exell, Jonathan Mark

(57) **Abstract**

The invention includes methods 100, 300 for allowing a user to selectively forward incoming POTS telephone calls received at a computer 406 on a LAN to an IP-based device 402, 402A on the LAN. The methods 200, 300 allow a user with an IP-based device 402, 402A on a LAN to place an IP-based telephone call from the IP-based device 402, 402A through the computer 406 and out on a POTS line 408 to destination telephone numbers. Systems 400 and computer media 500 incorporating the methods 100, 200, 300 of the present invention are also disclosed.

## Description

### FIELD OF THE INVENTION

The present invention relates generally to voice communications over Internet Protocol-based (IP-based) networks. More particularly, the present invention relates to a placing and receiving Plain Old Telephone System (POTS) calls and IP-based telephone calls over an IP-based network.

### BACKGROUND OF THE INVENTION

Voice over Internet Protocol (VoIP) technology provides an alternative and potentially less expensive means for voice communications relative to conventional telephone systems. Conventional telephone systems utilizing POTS (analog transmission) or the Public Switched Telephone Network (PSTN) (digital transmission) require end-to-end connections comprising switched hard wires or fiber optics during telephone calls. In contrast, VoIP technology allows voice packets to be transmitted over IP-based data networks such as the public Internet. IP-based networks allow packets to take multiple paths before being assembled at the destination.

The cost of data transmission over the public Internet is typically a fixed monthly fee and is not dependent on the amount of data transmitted. Additionally, the public Internet has global geographic span. An initial motivation for developing VoIP communications systems was to provide alternative and less expensive means of making long distance telephone calls. However, VoIP is now being developed as a universal communications network by consolidating data and voice transmission in a single network.

A conventional VoIP system may include a pair VoIP gateways in communication with each other over an IP-based network for transmitting voice packets over IP-based networks such as the public Internet and translating between the conventional PSTN and VoIP transmissions. Such VoIP gateways are typically refrigerator sized racks of electronics and very expensive. A simpler conventional VoIP system may include dedicated hardware or software on a couple of computers in communication with an IP-based Local Area Network (LAN), a private Internet or the public Internet. But such simpler conventional VoIP systems may not provide call redirecting, voice messaging and capability to send and receive calls to and from conventional telephone networks such as the POTS and PSTN.

However, conventional VoIP systems do not appear to provide a method and system for allowing a user to selectively and automatically redirect POTS telephone calls received at a workstation on a LAN to an IP-based device on the LAN and at a location remote from the workstation. Conversely, it would be desirable for a method and system that allows a user with an IP-based device on a LAN distant from a workstation to be able to make an IP-based telephone call from the IP-based device through the workstation and out on a POTS line to destination telephone numbers off-site. Such a method and system provides a "low cost gateway" for translating between IP-based voice communications and conventional POTS voice communications.

### SUMMARY OF THE INVENTION

The invention includes a method and system for placing and redirecting IP-based telephone calls. The method may include providing an IP-based device configured for communicating IP-based telephone calls over an IP-based network and providing a computer operable for communication with the IP-based device over the IP-based network and in communication with a POTS telephone line. The method may also include selectively forwarding the incoming POTS telephone call to the IP-based device over the IP-based network in response to receiving an incoming POTS telephone call at the computer and receiving the IP-based telephone call at the computer, translating the IP-based telephone call into an outgoing POTS telephone call and routing the outgoing POTS telephone call through the POTS telephone line in response to initiating an IP-based telephone call from the IP-based device.

Additional features and advantages of the invention will be apparent from the detailed description which follows, taken in conjunction with the accompanying drawings, which together illustrate, by way of example, features of the invention.

### BRIEF DESCIPLIPTION OF THE DRAWINGS

The following drawings illustrate exemplary embodiments for carrying out the present invention. Like reference numerals refer to like parts in different views or embodiments of the drawings.

FIG. 1 is a flow chart of a method of receiving a POTS telephone call on an Internet Protocol (IP)-based device connected to an IP-based LAN according to the present invention.

FIG. 2 is a flow chart of a method of placing a telephone call from an Internet Protocol (IP)-based device on a LAN to a POTS line according to the present invention.

FIG. 3 is a flow chart of a method of placing and receiving IP-based telephone calls over an IP-based network according to the present invention.

FIG. 4 is a block diagram of a system for placing and receiving IP-based telephone calls over an IP-based network in accordance with the present invention.

FIG. 5 is a block diagram of a computer media for storing a computer program configured for implementing a method according to the present invention.

### DETAILED DESCRIPTION

The invention includes methods for placing and redirecting IP-based telephone calls. The invention also includes a system and computer media incorporating the methods of the invention. Reference will now be made to the exemplary embodiments illustrated in the drawings, and specific language will be used herein to describe the same. It will nevertheless be understood that no limitation of the scope of the invention is thereby intended. Alterations and further modifications of the inventive features illustrated herein, and additional applications of the principles of the inventions as illustrated herein, which would occur to one skilled in the relevant art and having possession of this disclosure, are to be considered within the scope of the invention.

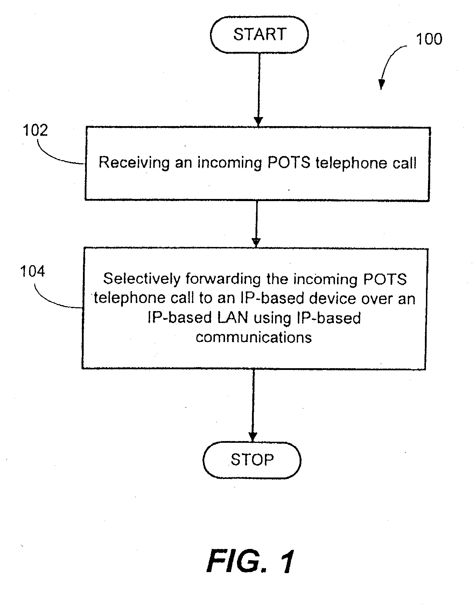

FIG. 1 is a flow chart of a method 100 of receiving a POTS telephone call on an IP-based device connected to an IP-based LAN according to the present invention. Method 100 may include receiving 102 an incoming POTS telephone call and selectively forwarding 104 the incoming POTS telephone call to an IP-based device over an IP-based LAN using IP-based communications. IP-based communications consistent with method 100 may include VoIP communications, H.323 compliant communications, IP-based protocols such as Session Initiation Protocol (SIP), Media Gateway Control Protocol (MGCP), Simple Gateway Control Protocol (SGCP), Internet Protocol Device Control (IPDC), Realtime Transport Protocol (RTP), packetized ".wav" files or any other IP-based voice packet communications. Such communications standards and protocols are within the knowledge of one skilled in the art and, thus, will not be further detailed herein.

Selectively forwarding 104 may further include waiting a preselected number of rings to answer the incoming POTS telephone call. This feature gives the user time to answer the POTS call at a telephone handset or at a computer configured to receive and answer telephone calls prior to forwarding the telephone call according to the present invention. Selectively forwarding 104 may also further include routing the incoming POTS telephone call to a preselected IP address corresponding to the IP-based device over the IP-based LAN as an IP-based telephone call if the incoming POTS telephone call remains unanswered after the preselected number of rings.

In another embodiment, selectively forwarding 104 may further include providing the caller with an audio menu to either forward the incoming POTS telephone call to the preselected IP address corresponding to the IP-based device or to simply record a message without attempting to complete the call by forwarding. This embodiment of selectively forwarding 104 gives the caller flexibility in handling the incoming POTS telephone call. In yet another embodiment, selectively forwarding 104 may further include selectively forwarding the incoming POTS call to the preselected IP address or providing the caller with a audio prompt to record a message based on caller identification information (Caller-ID). This embodiment of selectively forwarding 104 allows the recipient to preselect how to handle an incoming POTS call based on who the caller is (Caller-ID).

Selectively forwarding 104 may further include providing the caller an audio prompt to record a message if the IP-based device does not answer the IP-based telephone call after a second preselected number of rings. This feature provides message recording capability if the intended recipient of the call is unavailable even after forwarding the call to the IP-based device. The second preselected number of rings may or may not be the same as the first preselected number of rings. This message recording capability allows the caller to selectively record a message, provide a callback number or hang up without leaving a message under the control of the caller. The prompt may be provided by the computer forwarding the incoming POTS telephone call or by the IP-based device to which the POTS telephone call is forwarded. The mechanization of providing a prompt and recording a message or callback number is within the knowledge of one of ordinary skill in the art and, thus, will not be further elaborated herein.

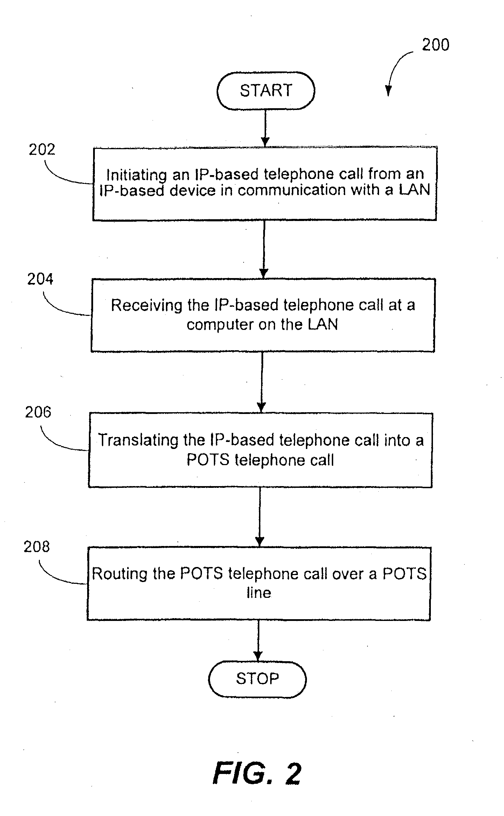

FIG. 2 is a flow chart of a method 200 of placing a telephone call from an IP-based device on a LAN to a POTS line according to the present invention. Method 200 may include initiating 202 an IP-based telephone call from an IP-based device in communication with a LAN, receiving 204 the IP-based telephone call at a computer on the LAN, translating 206 the IP-based telephone call into a POTS telephone call and routing 208 the POTS telephone call over a POTS line. Initiating 202 an IP-based telephone call may include initiating a VoIP telephone call. Initiating 202 an IP-based telephone call may include inputting a destination telephone number or selecting one from a directory or contacts database. Receiving 204 the IP-based telephone call at a computer on the LAN may include receiving the IP-based telephone call at the computer connected to the LAN and to the POTS line.

Routing 208 the POTS telephone call may include routing the POTS telephone call through a Local Exchange Carrier (LEC), through the PSTN, through another LEC and finally to the destination telephone. Alternatively, the POTS telephone call may be routed to another IP-address on the LAN. The other IP-address may be associated with an IP soft-phone or an IP telephone in communication with the LAN. The POTS telephone call may also be routed over the LAN through a gateway to another IP-based network to an IP address associated with an IP soft-phone or an IP telephone.

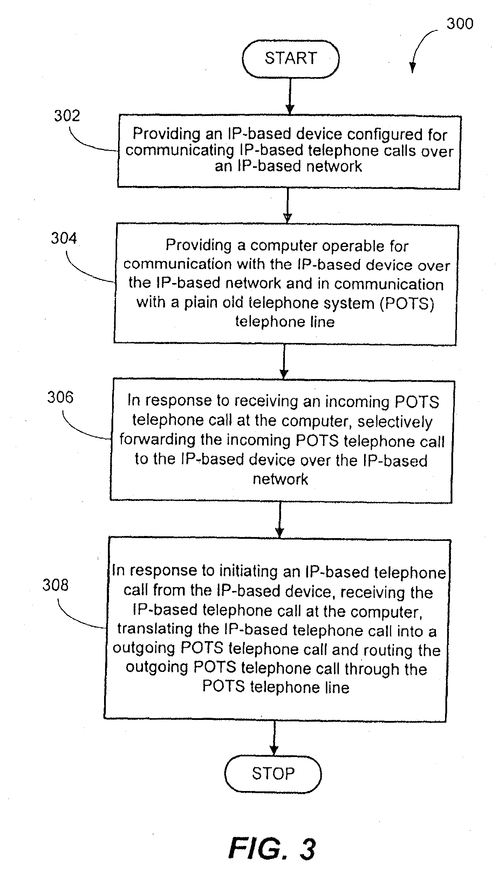

FIG. 3 is a flow chart of a method 300 of placing and receiving IP-based telephone calls over an IP-based network according to the present invention. Method 300 may include providing 302 an IP-based device configured for communicating IP-based telephone calls over an IP-based network and providing 304 a computer operable for communication with the IP-based device over the IP-based network and in communication with a POTS telephone line. Method 300 may further include selectively forwarding 306 the incoming POTS telephone call to the IP-based device over the IP-based network in response to receiving an incoming POTS telephone call at the computer. Method 300 may further include receiving 308 the IP-based telephone call at the computer, translating the IP-based telephone call into a outgoing POTS telephone call and routing the outgoing POTS telephone call through the POTS telephone line in response to initiating an IP-based telephone call from the IP-based device. IP-based communications consistent with method 300 may include VoIP communications, H.323 compliant communications, IP-based protocols such as SIP, MGCP, SGCP, IPDC, RTP, packetized ".wav" files or any other IP-based voice packet communications.

Selectively forwarding 306 may further include waiting a preselected number of rings to answer the incoming POTS telephone call. This feature gives the user time to answer the incoming POTS call at a telephone handset or at a computer configured to receive and answer telephone calls prior to forwarding the telephone call according to the present invention. Selectively forwarding 306 may further include routing the incoming POTS telephone call to a preselected IP address corresponding to the IP-based device over the IP-based network as an IP-based telephone call if the incoming POTS telephone call remains unanswered after the preselected number of rings.

In another embodiment, selectively forwarding 306 may further include providing the caller with an audio menu to either forward the incoming POTS telephone call to the preselected IP address corresponding to the IP-based device or to simply record a message for the intended recipient without attempting to complete the call by forwarding. This feature gives the caller flexibility in handling the incoming POTS telephone call.

In yet another embodiment, selectively forwarding 306 may further include either forwarding the incoming POTS call to the preselected IP address or providing the caller with an audio prompt to record a message based on caller identification information (Caller-ID). This feature allows the recipient to preselect how to handle an incoming POTS call based on who the caller is using Caller-ID.

In even yet another embodiment, selectively forwarding 306 may further comprise providing an audio prompt to record a message if the IP-based device does not answer the IP-based telephone call after a second preselected number of rings and recording the message if desired by a caller. This feature provides message recording capability if the intended recipient of the call is unavailable even after forwarding the call to the IP-based device. As noted above, the second preselected number of rings may or may not be the same as the first preselected number of rings. Initiating an IP-based telephone call may include inputting a destination telephone number or selecting one from a directory or contacts database.

Routing the outgoing POTS telephone call may include routing through a LEC, a PSTN, through another LEC and finally to the destination telephone. Alternatively, the POTS telephone call may be routed to another IP-address on the LAN. The other IP-address may be associated with an IP soft-phone or an IP telephone in communication with the LAN. The POTS telephone call may also be routed over the LAN through a gateway to another IP-based network to an IP address associated with an IP soft-phone or an IP telephone.

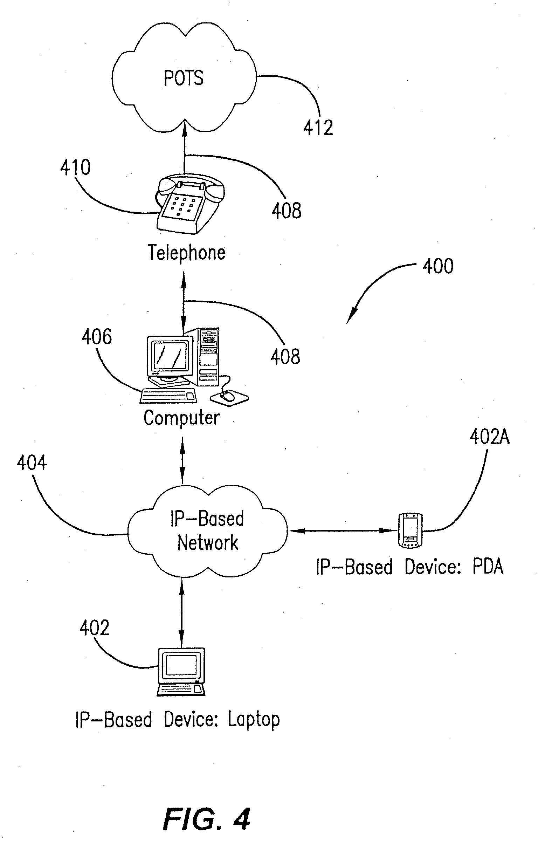

FIG. 4 is a block diagram of a system 400 for placing and receiving IP-based telephone calls over an IP-based network in accordance with the present invention. System 400 may include an IP-based device 402 configured for IP-based communication over an IP-based network 404 and a computer 406 configured for communication with a POTS line 408 and configured for IP-based communication with the IP-based device 402 over the IP-based network 404. System 400 may further include the IP-based device 402 further configured to receive and send IP-based telephone calls using the computer 406 and the POTS line 408. System 400 may further include a telephone 410 in communication with the computer 406 and POTS line 408 for the user to answer the incoming POTS call.

The POTS line 408 may be connected to the POTS 412, which may in turn be connected to other telephone system switches and networks such as a local exchange carrier (LEC) and the PSTN, not shown for clarity. IP-based communications consistent with system 400 may include VoIP communications, H.323 compliant communications, IP-based protocols such as SIP, MGCP, SGCP, IPDC, RTP, packetized ".wav" files or any other IP-based voice packet communications.

System 400 may be configured to forward the incoming POTS call to the IP-based device 402 having a preselected IP address if the incoming POTS telephone call remains unanswered after a first preselected number of rings. This gives a user a window of time (equal to the first preselected number of rings) to answer the incoming POTS call. If the incoming POTS call remains unanswered after the first preselected number of rings, the incoming POTS call may then be forwarded to the preselected IP address of the IP-based device 402 on the IP-based network 404. System 400 may be further configured to provide a prompt to record a message if the IP-based device 402 does not answer the IP-based telephone call after a second preselected number of rings and recording the message if desired by a caller. Thus, according an embodiment of the present invention, the caller has the option of recording a message for the intended recipient of the call. The mechanization of the call forwarding and voice messaging features are within the knowledge of one skilled in the art and, thus, will not be further elaborated herein.

The IP-based device 402 may be a laptop computer or a personal digital assistant (PDA) 402A, as shown in FIG. 4. The IP-based device 402 may also be an IP-based telephone, a computer configured with software to operate as an IP-based telephone or any other IP-based device configured to connect to an IP-based network, capable of transmitting and receiving voice packets and capable of transmitting and receiving audio from a user.

The IP-based network 404 may be a LAN, a wide area network a private Internet, a public Internet or any other IP-based network consistent with the present invention. Furthermore, IP-based network 404 may be an IP-based wireless network, for example and not by way of limitation, an IEEE 802.11 compliant network, Bluetooth™ compliant network or any other IP-based wireless network consistent with the present invention.

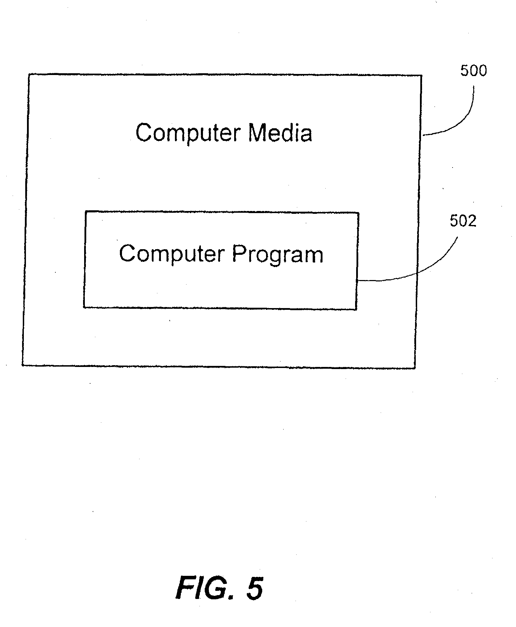

FIG. 5 is a block diagram of a computer-readable media 500 for storing a computer program 502 configured for implementing one or more methods 100, 200, 300 according to the present invention. Computer-readable media 500 may be any suitable storage medium for storing a computer program 502, e.g., compact disc read only memory (CD-ROM), digital versatile disc read only memory (DVD-ROM), Zip™ Disk, Memory Sticky™, SD Card™, floppy disk, read only memory (ROM), programmable ROM (PROM), electrically erasable PROM (EEPROM), nonvolatile electrically block-erasable programmable read only memory (Flash), or any other suitable media for storing a computer program 502. Flash memory for storing a computer program 502 may take many forms, for example and not by way of limitation, Memory Stick™ or SD memory card™. Computer-readable media 500 may also be mass storage on a server configured for downloading software over a network. Computer program 502 may also be firmware embedded in the operating system of the IP-based device 402, an applet or plug-in down-loadable and configurable computer program, or device driver for execution on the IP-based device 402. The particular type of computer-readable media 500 and the form of the computer program 502 are not critical to the present invention.

It is to be understood that the above-referenced arrangements are illustrative of the applications for the principles of the present invention. Numerous modifications and alternative arrangements may be devised without departing from the spirit and scope of the present invention. While the present invention has been shown in the drawings and described above in connection with the exemplary embodiments of the invention, it will be apparent to those of ordinary skill in the art that numerous modifications may be implemented without departing from the principles and concepts of the invention as set forth in the claims.

## Claims

1. A method 100 of receiving a plain old telephone system (POTS) telephone call on an Internet Protocol (IP)-based device 402, 402A connected to an IP-based Local Area Network (LAN), comprising:
receiving 102 the incoming.POTS telephone call; and
selectively forwarding 104 the incoming POTS telephone call to the IP-based device 402, 402A over the IP-based LAN using IP-based communications.

2. A method 200 of placing a telephone call from an Internet Protocol (IP)-based device 402, 402A on a Local Area Network (LAN) to a plain old telephone system (POTS) line 408, comprising:
initiating 202 an IP-based telephone call from an IP-based device 402, 402A in communication with a LAN;
receiving 204 the IP-based telephone call at a computer 406 on the LAN;
translating 206 the IP-based telephone call into a POTS telephone call; and
routing 208 the POTS telephone call over a POTS line 408.

3. A method 300 of placing and receiving IP-based telephone calls over an IP-based network 404, the method 300 comprising:
providing 302 an IP-based device 402, 402A configured for communicating IP-based telephone calls over an IP-based network 404;
providing 304 a computer 406 operable for communication with the IP-based device 402, 402A over the IP-based network 404 and in communication with a plain old telephone system (POTS) telephone line 408;
in response to receiving an incoming POTS telephone call at the computer 406, selectively forwarding 306 the incoming POTS telephone call to the IP-based device 402, 402A over the IP-based network 404;
in response to initiating an IP-based telephone call from the IP-based device 402, 402A, receiving 308 the IP-based telephone call at the computer 406, translating the IP-based telephone call into a outgoing POTS telephone call and routing the outgoing POTS telephone call through the POTS telephone line 408.

4. The method 300 according to claim 3, wherein communicating IP-based telephone calls over an IP-based network 404 comprises at least one of Voice over Internet Protocol (VoIP) communications, H.323 compliant communications, Session Initiation Protocol (SIP), Media Gateway Control Protocol (MGCP), Simple Gateway Control Protocol (SGCP), Internet Protocol Device Control (IPDC), Realtime Transport Protocol (RTP), or packetized ".wav" files.

5. The method 300 according to claim 3, wherein selectively forwarding 306 comprises:
waiting a preselected number of rings to answer the incoming POTS telephone call; and
routing the incoming POTS telephone call to a preselected IP address corresponding to the IP-based device 402, 402A over the IP-based network 404 as an IP-based telephone call if the incoming POTS telephone call remains unanswered after the preselected number of rings.

6. The method 300 according to claim 5, further comprising:
if the IP-based device 402, 402A does not answer the IP-based telephone call after a second preselected number of rings, providing a prompt to record a message; and
recording the message if desired by a caller.

7. The method 300 according to claim 3, wherein selectively forwarding 306 comprises providing a caller an audio menu with options to either forward the incoming POTS telephone call to a preselected IP address corresponding to the IP-based device 402, 402A or record a message.

8. A system 400 for placing and receiving IP-based telephone calls over an IP-based network 404, comprising:
an IP-based device 402, 402A configured for IP-based communication over an IP-based network 404;
a computer 406 configured for communication with a plain old telephone system (POTS) line 408 and configured for IP-based communication with the IP-based device 402, 402A over the IP-based network 404; and
the IP-based device 402, 402A further configured to receive and send IP-based telephone calls using the computer 406 and the POTS line 408.

9. The system 400 according to claim 8, wherein the computer 406 is further configured to wait a preselected number of rings for a user to answer an incoming POTS call and selectively forwarding the incoming POTS call to the IP-based device 402, 402A having a preselected IP address over the IP-based network 404 if the incoming POTS call remains unanswered after the preselected number of rings.

10. A computer program comprising computer program code means for performing all of the steps of any of claims 1 or 2.
